# EUROPEAN PATENT APPLICATION

(11) **EP 1 604 860 A1**
(43) Date of publication of application: **14.12.2005**
(21) Application number: 05076381.2
(22) Date of filing: 13.06.2005
(51) Int. Cl.: B60M 1/04, B61L 1/08

(54) **Galvanically connecting the rails of a railway**

(30) Priority: 11.06.2004 NL 1026396; 21.02.2005 NL 1028351; 09.06.2005 NL 1029220
(71) Applicant: Volker Stevin Rail & Traffic Nederland BV, 4131 NJ Vianen (NL)
(72) Inventor: Tiecken, Jacques, 4131 NJ Vianen (NL)
(74) Representative: Assendelft, Jacobus H.W.

(57) **Abstract**

The invention relates to a method to temporary galvanically connect the rails to simulate the presence of a train. For that permanent contact points are provided at a plurality of fixed locations along the railway. At the desired locations the contact points of the pairs are temporary connected by an own, adjacent switch. Each switch is housed in a dedicated switching box containing means to determine the authenticity of the provided commands; an ohm meter with which the quality of the short circuit is determined; and wireless transmission and receiving means to communicate with a remote computer.

## Description

This invention relates to mutually galvanically connecting the two rails of a railway, e.g. to simulate the presence of a train for the railway traffic control and thus make further train traffic impossible, such that the relative rail part is secured for railway traffic and one can safely work on the rail.

E.g. the International patent publication WO97/09193 discloses a method for galvanically connecting the two rails by using a so called short circuit lance. An extendable rod is clamped with its ends against the web of the rails, such that the rails are galvanically connected through said rod. Possibly the rod makes with both ends an additional galvanic connection with the relevant rail. Said additional galvanic connections are connected to an ohm meter, such that the correct function of the short circuit lance can easily be tested.

The object of this invention is an alternative way for galvanically connecting the rails of a rail way. The object of the invention is versatile and comprises, a.o., one or more of the follwing: reliable, e.g. the galvanic contact more of the follwing: reliable, e.g. the galvanic contact with the rails; light weight; simple to install; cheap to manufacture, maintain or repair; insensitive to failure; adapted for many locations; safe; comprehensive in use; allows for documenting the manner of use.

### CONTACT BUSHES/RELAIS BOX

On the one hand it is proposed to apply galvanic contact points which at a fixed location and/or permanently are connected to the rails and to which selectively a device can temporarily be connected to make the desired mutual galvanic connection of the rails. Contact points are prefered to which flexible conductors can directly be connected temporarily, e.g. by a plug or clamp connection (e.g. a clip).

An example of the permanent electrical contact points is e.g. a contact bush located in e.g. the web of a rail, and permanently mounted thereto a connection plug (like the so called Cembre method, known as such in the field of railways), to which through the plug a connection cable can be connected which again is connected to an apparatus for making the galvanic connection and/or control thereof, such as an ohm meter, which is known as such from WO97/09193.

E.g. a plurality of such contact bushes are installed with mutual spacing (the locations are selected with a view to putting the railway out of use for e.g. maintenance at a later time) A hole is drilled in the web and a contact bush is pressed in it. Thus the galvanic contact between contact bush and rail is permanently secured. Each time two conact bushes are installed substantially opposite each other, each in one of the two rails of a rail way.

An alternative for the contact bush is mounting a contact plug to the surface, e.g. by fixedly welding it to a blank ground surface.

Another example of the permanent galvanic contact points is a connection point in a relais box or another regulating or control box wherein electric and/or electronic equipment for the railway traffic control is installed (e.g. relais box). An connection cable can also connected thereto, which itself is connected to an apparatus to make the galvanic connection and/or control thereof, such as an ohm meter which is known as such from WO97/09193.

As an alternative the so called rail relais or repetition relais in said regulating or control box is switched, with which the same result can be obtained.

### SWITCH/LINK

This invention also proposes to equip the system to galvanically connect the rails with a device (hereafter: LINK) to switch said system and/or to record and/or detect one or more data relating to said system. Concerning the date one can differentiate between, a.o., identity date (e.g. authenticity), quality data (e.g. proper galvanic contact with the rails) and event data )e.g. location, date, time).

This LINK can both be used with existing connection systems (such as e.g. known from WO97/09193) and with the system according to this invention as indicated above (paragraph CONTACT BUSHES/RELAIS BOX).

An example of this LINK is a housing (e.g. located at a safe distance next to the rail way), which is connected to the rails (e.g. through the contact bushes or the short circuit lance according to WO97/09193) and can e.g. be controlled by e.g. a key for switching the galvanic connection of the rails and/or wherein one or more data are detected and/or recorded. Said housing e.g. contains an electric/electronic circuit adapted according to its function (e.g. an ohm meter to be connected to the rails). Said housing can be located at an ergonomic/convenient level, e.g. on top of a column/pole. Said housing is possibly part of the regulating or control box (relais box).

A removable, e.g. insertable, unit (control unit) can e.g. belong to this LINK, which is designed for data communication with said device and/or another device/apparatus. Said unit is e.g. designed to check the authenticity of the commands provided to the LINK (key function) or to record (measuring) data, such as one or more of identity (e.g. of the device), quality, date, time and location of the galvanic connection made between the rails. Data (e.g. identity data, quality data or event data) can be stored on the unit to e.g. download them at a later time into a PC at the office. This unit can be a so called chip card, possibly provided with an own power supply.

A number of the data can permanently be stored at the LINK, such as relating to its identity. LINK is preferably provided with a computer to control the several functions, providing the communication with peripheral equipment (e.g. the ohm meter) or the control unit and processing/making/getting from the memory of the required data.

The LINK can be embodied permanently, or be designed for temporary use at a predetermined location. It can be used to galvanically connect the rails and/or check the quality of said connection.

### EXAMPLE

At a track part a LINK, standing on a column, is installed next to the railway and connected to the two opposite contact bushes of the rails. At the time it is desired to put the track part out of order, the controller inserts the correct chip card into LINK. Between LINK and the chip card digital data communication takes place for an authenticity check (is the correct chip card used, is the correct LINK/location involved). Subsequently the controller inserts a key into LINK and turns it, with which LINK receives the command to make the short circuit between the rails. The chip card detects the identity of the LINK and the quality, date, time and location of the short circuit and stores said data in its memory. The quality data are provided by the ohm meter of LINK. The location is programmed in LINK beforehand and is retrieved by the computer of LINK from the memory.

Many other embodiments based on the above are feasible. E.g. concerning LINK data such as date, time and location can be provided in an other manner, e.g. through GPS (e.g. location) or a radio telephone network (GSM; e.g. date/time), for which LINK and/or the chip card can be provided with a for said purpose adapted receiver. In stead of storing the data on the chip card to download at a later time, said data can also be saved in LINK and e.g. immediately downloaded therefrom (e.g. after the temporary use thereof) or can be downloaded onto another intermediate data carrier (e.g. memory card) to be transferred to the office, or can wireless be transmitted over large distances, e.g. through a radio telephone network.

It is even feasible, to remotely carry out the communiction between LINK and the controller through e.g. infrared or radio waves.

It is also feasible, to provide the supply of LINK through a battery and/or solar panel.

For the wireless (data)communication a LINK can be provided with a wireless transmission and receiving unit which is connected to the computer/data processing unit

With one or more LINKs one can quickly and reliably make a working location security as follows: At a prior time a data file can be made, containing the one or more LINKs that are required to secure a predetermined working location. This data file is e.g. made on the basis of a railway map displayed on a screen, wherein the locations of the LINKs are indicated. By pointing at the screen, predetermined LINKs are selected and added to the data file in the computer memory or indicated therein as being selected. In this data file the selected LINKs are e.g. identified by their unique code. This data file can be used in a computer simulation programm to determine if the working location security will be sufficient. Subsequently the data file is retrieved by the central computer which on the basis thereof generates a command and transmits it wireless or not, on the basis whereof merely the selected LINKs contained in the data file receive a command whereby they switch and short circuit the relevant railway. Preferably the LINKs give a response after receipt of the command relating to succesful or unsuccesful switching, which response is received and processed by the central computer, which e.g. translates into a display on the screen. The commands and response are routed through e.g. SMS service or similar, such that with a single command of the central computer all selected LINKs simultaneously receive a switching command.

## Claims

1. Method for temporarily mutually galvanically connecting the rails of a railway, e.g. to simulate the presence of a train, by making use of contact points which are provided at a fixed location at or permanently galvanically connected to the rails, e.g. mounted thereto.

2. Method according to claim 1, wherein such permanent contact points are provided at a plurality of predetermined locations along the railway and at a later time from said locations one or a plurality, not all, are selected, from which the contact points are temporarily connected, preferably by a permanently present switch, to simulate the presence of a train at the predetermined, selected locations along the railway.

3. Method according to claim 1 or 2, wherein each pair of contact points, designed to simulate the presence of a train at the relevant location, is connected to an own permanently installed and for this method dedicated adjacent switching box with means to selectively temporarily mutually connect the contact points galvanically.

4. Method according to claim 1, 2 or 3, wherein the contact points are gavanically mutually connected after determining the authenticity of the commands given by the means in the switching box, and the quality of the short circuit is determined by a device, such as an ohm meter, within the switching box and is recorded.

5. Method according to any of the preceeding claims, wherein the switching box is equipped with wireless transmission and/or receiving means to communicate with a remote unit.

6. Method according to any of the preceeding claims, wherein by a first person a computer data file is made wherein the selection of the contact point pairs, to be connected, is contained, which data file is used by a second person in a simulation program running on a computer to verify the selected contact point pairs, whereafter by authorization by said second person a first check record is made and stored by the computer, whereafter the data file is used in an operating program running on the computer which checks the authorization and makes a command on the basis of the data file and sends it to the switching means of the selected contact point pairs which, in response, each send back a response, which are detected by the computer which on the basis thereof makes and saves a second check record.

7. Method according to claim 6, wherein the command is simultaneously send to all switching means with an own unique code for each selected contact point pair, and a switching means merely switches and sends back a response when receiving the command of the own unique code from the corresponding contact point pair.

8. Method according to claim 6 or 7, wherein the data file is made by pointing at locations on a screen and the simulation programm shows at the screen an image of the railway track in relation with the selected contact point pairs.
